# EUROPEAN PATENT APPLICATION

(11) **EP 2 578 776 A1**
(43) Date of publication of application: **10.04.2013**
(21) Application number: 11789513.6
(22) Date of filing: 17.03.2011
(51) Int. Cl.: E04G 23/08

(54) **DEMOLISHING AND CUTTING MACHINE**

(30) Priority: 01.06.2010 JP 2010125786
(71) Applicant: NIPPON PNEUMATIC MANUFACTURING CO., LTD., Osaka-shi, Osaka 537-0003 (JP)
(72) Inventor: KIMURA Sehiro, Nabari-shi, Mie 518-0605 (JP); HOKAZONO Toshiyuki, Nabari-shi, Mie 518-0605 (JP); KATO Jun, Nabari-shi, Mie 518-0605 (JP)
(74) Representative: Grünecker, Kinkeldey, Stockmair & Schwanhäusser
(86) International application number: PCT/JP2011/056413
(87) International publication number: WO 2011/152103

(57) **Abstract**

It is proposed to prevent deformation of the tips of outer side walls of insert fitting recesses provided at the distal end of a jaw, thereby improving durability of the jaw and preventing breakage of the bolts. Insert fitting recesses (22) are formed on both sides of a movable jaw (4) movable between open and closed positions relative to the fixed jaw (3) at its distal end. Shear inserts (23) are fitted in the respective insert fitting recesses (22) and fixed in position by tightening bolts (30) for shearing an object (A) to be cut in cooperation with shear blades (12, 15 and 16) mounted at the distal end of the fixed jaw (3). Each insert fitting recess (22) has an outer side wall (32) including a first flat surface (33) inclined outwardly relative to the inner side surface (23a) of the shear insert (23), an inclined surface (34) inclined in the opposite direction to the first flat surface (33), and a second flat surface (35) extending substantially parallel to the inner side surface (23a) of the shear insert (23). The shear inserts (23) each have an abutment surface (38) adapted to be brought into surface abutment with the second flat surface (35), and a braking surface (39) facing the first flat surface (33). During cutting the object to be cut, a shear reaction force applied to shear inserts (23) is supported by the first flat surfaces (33) over the entire areas thereof. This prevents stress concentration on the tips of the outer side walls (32).

## Description

### TECHNICAL FIELD

This invention relates to a demolition cutter used for demolishing various objects produced during civil engineering work.

### BACKGROUND ART

To demolish steel reinforced or reinforced concrete buildings, a demolition cutter is used which is mounted to the free end of an arm of construction or civil engineering machinery such as a power shovel. In particular, buildings are crushed and their steel bars and steel frames are cut to small pieces.

Some demolition cutters have a fixed jaw and a movable jaw movable between open and closed positions relative to each other. Other demolition cutters have two jaws which are both movable relative to each other between open and closed positions. Most demolition cutters of either type have shear blades mounted on back sides of the respective jaws which overlap with each other when the jaw or jaws are moved toward the closed position, along the respective inner edges so that objects to be cut are sheared by these shear blades.

If the opposed inner side surfaces of each jaw of such a demolition cutter lies on a single plane and the inner side edge of the back surface of each jaw extends in a straight line, with the shear blades mounted on the respective jaws along the respective straight inner side edges, it is difficult to properly grip the object to be cut between the shear blades. Thus, it is especially difficult to cleanly cut objects having large sections such as H-beams and square pipes with such demolition cutters.

To avoid this problem, in the demolition cutter disclosed in Patent document 1, the fixed jaw and the movable jaw, which is movable between the open and closed positions relative to the fixed jaw, each have an inner side surface which is constituted by two flat surfaces portions inclined in opposite directions to each other so that the inner side edge of the back surface of each of the fixed jaw and the movable jaw forms a V shape, i.e. is concave toward its center. A shear blade is mounted along this V-shaped inner edge.

Two insert fitting recesses are formed in the front and back surfaces of the movable jaw, respectively, at its distal end portion so as to open to the inner side surface and the distal end surface of the movable jaw. Shear inserts are fitted in the respective insert fitting recesses and fixed in position by screws. Shear blades are mounted on the fixed jaw at its distal end so as to oppose the respective shear inserts. Objects to be cut are sheared between the shear inserts and the shear blades facing the respective shear inserts and between the opposed pair of shear blades mounted on the back surfaces of the respective jaws.

Figs. 15(a) and 15(b) shows the movable jaw of the demolition cutter disclosed in Patent document 1. Two shear blades 82 are arranged on the back surface of the movable jaw 81, which is pivotable about a pivot shaft 80, along its inner edge in the shape of the letter V, and fixed to the movable jaw 81 by bolts. The two shear inserts 84 are fitted in the two respective insert fitting recesses 83 formed in the front and back sides of the movable jaw 81 at its distal end, and fixed in position by tightening bolts 85. The outer side walls 83a of the respective insert fitting recesses 83 and the bolts 85 receive the shear reaction force F applied to the shear inserts 84 while objects to be cut are being sheared by the shear inserts 84.

### PRIOR ART DOCUMENTS

### PATENT DOCUMENTS

Patent document 1: JP Patent Publication 2006-519089A

### OBJECT OF THE INVENTION

In the demolition cutter disclosed in Patent document 1, since the outer side wall 83a of each insert fitting recess 83 is a flat surface extending substantially parallel to the inner side surface of the shear insert 84, a rotational moment is applied to the respective shear inserts 84 which tends to pivot the inserts 84 about the tips P of the respective outer side walls 83a, due to the shear reaction force F, which acts on the front ends of the shear inserts 84, during the initial stage of cutting (by piercing) of the objects to be cut. Stress thus concentrates on the tips P of the outer side walls. Since the movable jaw 81 is ordinarily made of a metal softer than the metal forming the shear inserts 84, the tips P of the outer side walls 83a tends to suffer local plastic deformation due to the stress concentration. This reduces durability of the jaw.

Significant deformation of the tips P will also make it impossible for the outer side walls 83a to receive the above-described rotational moment. This results in the shear reaction force F being applied to the bolts 85, increasing the possibility of breakage of the bolts 85. If the bolts loosen or gaps form around the bolts as a result of deformation of the tips P, a rotational moment applied to the shear inserts 84 is received by the tips P and the bolts 85. This could sharply accelerate deformation of the tips P and breakage of the bolts 85. It is time-consuming and troublesome to repair the deformed tips P.

An object of the present invention is to prevent deformation of the tips of the outer side walls of the insert fitting recesses provided at the distal end of the jaw, thereby improving durability of the jaw and preventing breakage of the bolts.

### MEANS TO ACHIEVE THE OBJECT

In order to achieve this object, the first invention provides a demolition cutter comprising first and second jaws which are movable relative to each other between open and closed positions such that when the first and second jaws are moved relative to each other toward the closed position, the first and second jaws cross each other at distal ends thereof first and the crossing points move toward centers thereof, wherein the first jaws is formed with insert mounting recesses in back and front surfaces thereof at a distal end portion thereof, and open to an inner side surface and a distal end surface, of the first jaw, two shear inserts having protruding portions, respectively, which cover the inner side surface of the first jaw at a distal end portion of the inner side surface, and fitted in and bolted to the respective insert mounting recesses, wherein each of the two shear inserts, including the protruding portion thereof, has an inner side surface defined by outer edges, the outer edges serving as shear cutting edges, and shear blades mounted to the second jaw so as to face the respective shear cutting edges of the two shear inserts, whereby an object to be sheared is sheared by the shear blades and the shear inserts, wherein the insert mounting recesses each have an outer side wall facing the opening of the inner side surface of the first jaw, and comprising a first flat surface inclined outwardly relative to the inner side surface of the corresponding shear insert, and a second flat surface connected to a rear end of the first flat surface and extending substantially parallel to the inner side surface of the corresponding shear insert, wherein a bent portion is provided at the boundary between the first and second flat surfaces, the shear insert each having an abutment surface which is in surface-to-surface abutment with the second flat surface, and a braking surface facing the first flat surface and configured to be brought into contact with the first flat surface over the entire area thereof when the shear insert pivots about the bent portion in a direction in which the abutment surface moves away from the second flat surface, wherein the shear inserts each have a back surface formed, along its outer edge, a longitudinal cutout extending from a mid-portion of the inner side surface of the shear insert toward a rear end thereof, and a lateral cutout connected to a rear end of the longitudinal cutout and extending to an outer side surface of the shear insert, and wherein the insert mounting recesses each have an insert abutting surface formed with a continuous L-shaped protrusion configured to be fitted in the longitudinal cutout and the lateral cutout.

One of the first and second jaws may be fixed with the other movable relative to fixed jaw between the open and closed positions. Or both jaws may be movable relative to each other between the open and closed positions.

When an object to be cut is sheared by the shear inserts and the shear blades, of the above-described demolition cutter by closing the pair of jaws, the jaws cross each other at their distal ends first, so that shear reaction force acts on the tips of the shear inserts when shearing a wide object such as an H-beam or a plate member. Due to this shear reaction force, a rotational moment is applied to the shear inserts which tends to pivot the shear inserts in a direction in which their abutment surfaces move away from the respective second flat surfaces.

As a result, the braking surface of each shear insert is brought into contact with the first flat surface over the entire area thereof. The rotational moment applied to the shear insert is thus supported by the first flat surface. Since the first flat surface and the protrusion engaged in the longitudinal cutout face each other in the rotational direction of the shear insert, the rotational moment applied to the shear insert is supported by both the first flat surface and the protrusion. This prevents stress concentration on the front ends of the outer side walls of the respective insert fitting recesses (front ends of the first flat surfaces), which in turn prevents local plastic deformation of the tips of the outer side walls of the insert fitting recesses.

Since the rotational moment applied to each shear insert is received by the first flat surface and the protrusion engaged in the longitudinal cutout, no rotational moment is applied to the bolts fixing the shear insert, which prevents breakage of the bolts.

In a preferred arrangement of the first invention, the first jaw has a cutout in the inner side surface thereof at its distal end, the protruding portions of the shear inserts being configured to be fitted in the cutout of the first jaw, and the cutout of the first jaw has an inner periphery formed with a third flat surface at a distal end of the inner periphery of the cutout of the first insert which extends parallel to the first flat surfaces. With this arrangement, since the rotational moment applied to the shear insert can be supported by the third flat surface too, the rotational moment can be supported by a larger surface area, i.e. the combined area of the first and third flat surfaces, which makes it possible to more effectively prevent plastic deformation of the tips of the outer side walls of the insert fitting recesses.

In another arrangement, the outer side wall of each of the insert mounting recesses further comprises an inclined surface connected to the rear end of the first flat surface and extending to a front end of the second flat surface, the inclined surface being inclined in an opposite direction to the first flat surface, and a projection is formed at the boundary between the inclined surface and the first flat surface, the projection protruding into the insert mounting recess and into the corresponding recess of the insert. With this arrangement, even if the bolts are broken, the projection prevents the shear insert from separating in the forward direction.

In order to achieve the object of the invention, the second invention provides a demolition cutter comprising two jaws which are movable relative to each other between open and closed positions, wherein the jaws each have an inner side surface comprising a first flat surface portion and a second flat surface portion forming a V shape so as to be concave toward a center of the inner side surface, and a back surface configured to overlap with the back surface of the other jaw when the jaws are moved toward the closed position, the back surface being formed with an insert mounting recess extending along the first flat surface portion, and a blade mounting recess connected a rear end of the insert mounting recess and extending along the second flat surface portion, two shear inserts fitted in and bolted to the respective insert mounting recesses so as to face each other when the jaws are moved relative to each other to the closed position, and two shear blades fitted in and bolted to the respective blade mounting recesses so as to face each other when the jaws are moved relative to each other to the closed position, whereby an object to be sheared is sheared between the shear inserts and between the shear blades when the jaws are moved relative to each other to the closed position, wherein the insert mounting recesses each have an outer side wall facing the opening of the inner side surface of the first jaw, and comprising a first flat surface inclined outwardly relative to the inner side surface of the corresponding shear insert, and a second flat surface connected to a rear end of the first flat surface and extending substantially parallel to the inner side surface of the corresponding shear insert, wherein a bent portion is provided at the boundary between the first and second flat surfaces, the shear insert each having an abutment surface which is in surface-to-surface abutment with the second flat surface, and a braking surface facing the first flat surface and configured to be brought into contact with the first flat surface over the entire area thereof when the shear insert pivots about the bent portion in a direction in which the abutment surface moves away from the second flat surface, wherein the shear inserts each have a back surface formed, along its outer edge, a longitudinal cutout extending from a mid-portion of the inner side surface of the shear insert toward a rear end thereof, and a lateral cutout connected to a rear end of the longitudinal cutout and extending to an outer side surface of the shear insert, and wherein the insert mounting recesses each have an insert abutting surface formed with a continuous L-shaped protrusion configured to be fitted in the longitudinal cutout and the lateral cutout.

In this demolition cutter too, as with the demolition cutter of the first invention, the first flat surfaces support, over the entire areas thereof, the rotational moment applied to the opposed pair of shear inserts when an object to be cut is sheared by the shear inserts by closing the pair of jaws. The rotational moment is also supported by the above-described protrusions. This prevents stress concentration on the tips of the outer side walls of the insert fitting recesses, which in turn prevents local plastic deformation of the tips of the outer wall surfaces of the insert fitting recesses.

In the second invention, as in the first invention, in order to prevent the shear inserts from separating in the forward direction, it is preferable that the outer side wall of each of the insert mounting recesses further comprises an inclined surface connected to the rear end of the first flat surface and extending to a front end of the second flat surface, the inclined surface being inclined in an opposite direction to the first flat surface, and a projection is formed at the boundary between the inclined surface and the first flat surface, the projection protruding into the insert mounting recess.

### ADVANTAGES OF THE INVENTION

In either of the first and second inventions, the rotational moment applied to the shear inserts while an object to be cut is being sheared is supported by the first flat surfaces over the entire areas thereof, and further by the protrusions engaged in the longitudinal cutouts of the shear inserts. This arrangement almost completely prevents local plastic deformation of the tips of the outer side walls of the insert fitting recesses, thus improving durability of the jaw formed with the insert fitting recesses, and also preventing breakage of the bolts mounting the shear inserts in position. Another advantage is that it is possible to dramatically reduce the time and trouble of repairing the tips of the outer side walls.

### BRIEF DESCRIPTION OF THE DRAWINGS

Fig. 1 is a front view of a demolition cutter according to a first embodiment of the present invention.
Fig. 2 is a partially cutaway left-hand side view of Fig. 1.
Fig. 3 is a perspective view showing two jaws of Fig. 1.
Fig. 4 is an enlarged front view showing a distal end portion of a movable jaw.
Fig. 5 is a sectional view taken along line V-V of Fig. 4.
Fig. 6 is a sectional view taken along line VI-VI of Fig. 4.
Fig. 7 is an exploded perspective view showing the movable jaw and one of two shear inserts.
Fig. 8 is an exploded perspective view showing the movable jaw and the other of the shear inserts.
Fig. 9 is a front view showing the movable jaw while the movable jaw is moving toward a closed position.
Fig. 10 is a front view of a demolition cutter of the second embodiment.
Fig. 11 is a front view of a demolition cutter of the third embodiment.
Fig. 12 is a front view showing two jaws while the jaws are moving toward a closed position.
Fig. 13 is a sectional view taken along line XIII-XIII of Fig. 12.
Fig. 14 is an exploded perspective view showing a jaw and a shear insert.
Fig. 15(a) is a front view of a movable jaw of a conventional demolition cutter; and Fig. 15(b) is a sectional view taken along line XV-XV of Fig. 15(a).

### BEST MODE FOR EMBODYING THE INVENTION

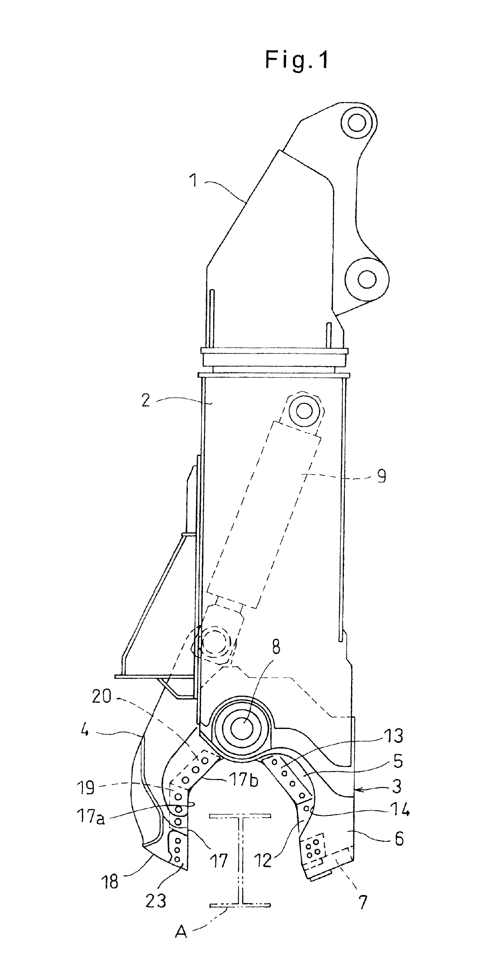

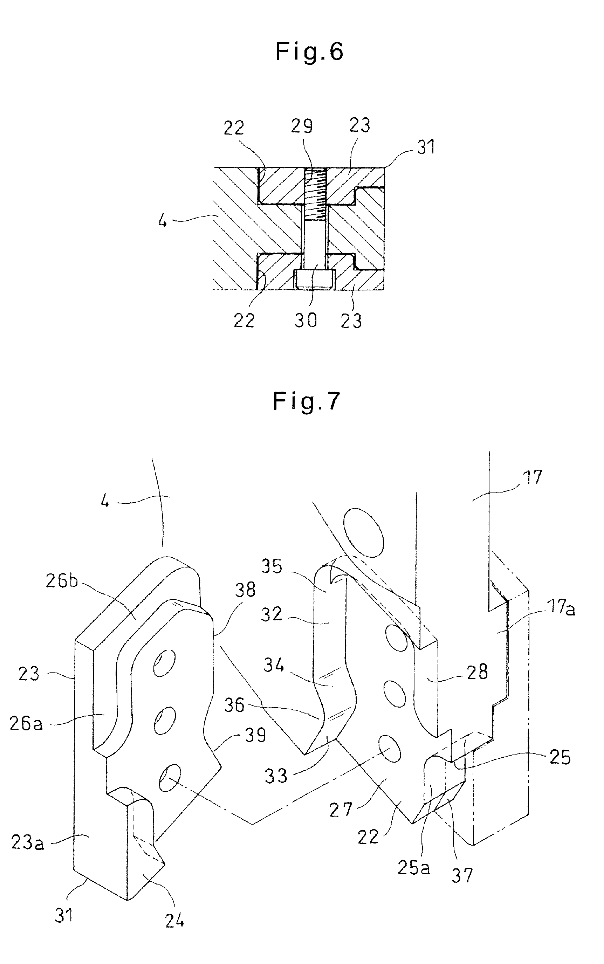

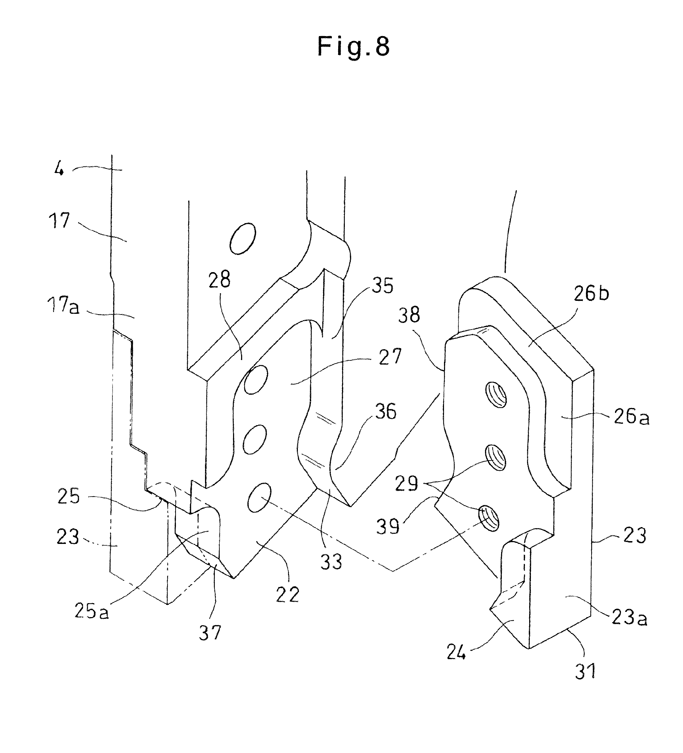

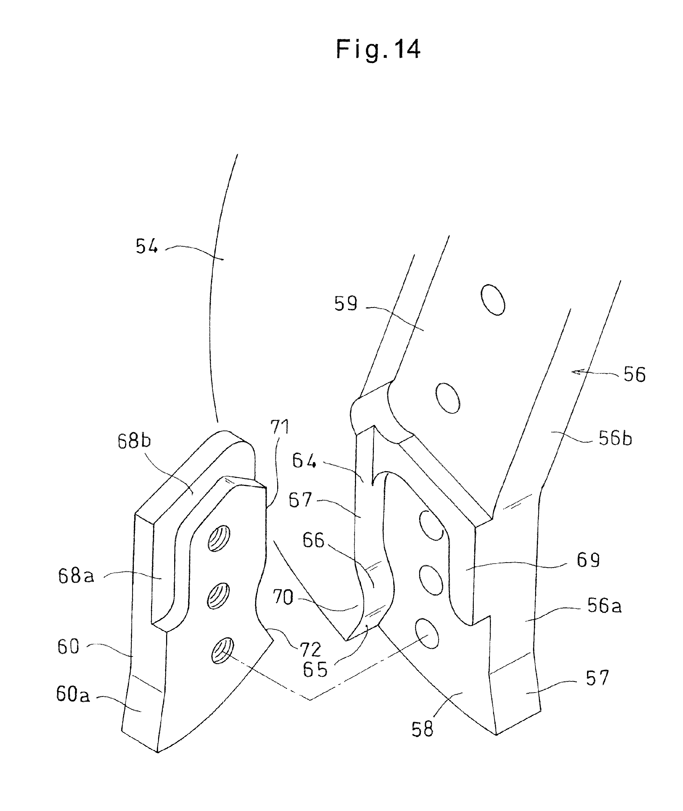

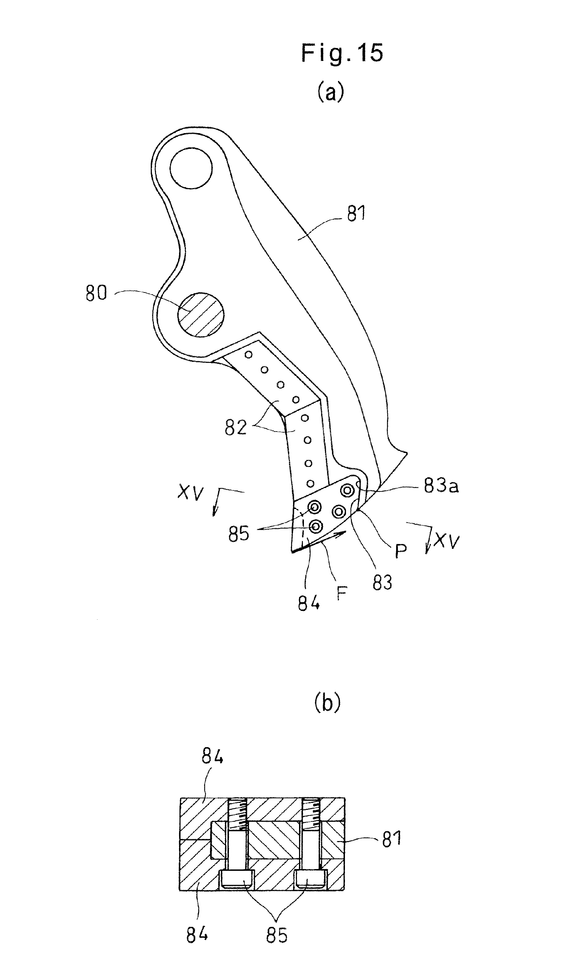

The embodiments of the invention are now described with reference to Figs. 1 to 15, of which Figs. 1 to 9 show the demolition cutter of the first embodiment. As shown in Fig. 1, the demolition cutter of the first embodiment includes a bracket 1 adapted to be detachably mounted to the free end of an arm of construction or civil engineering machinery, such as a power shovel, and a tubular cylinder casing 2 having its upper portion rotatably connected to the bottom end of the bracket 1.

The cutter further includes a fixed jaw 3 having its upper portion fitting in the bottom end portion of the cylinder casing 2, and a movable jaw 4 movable relative to the fixed jaw 3.

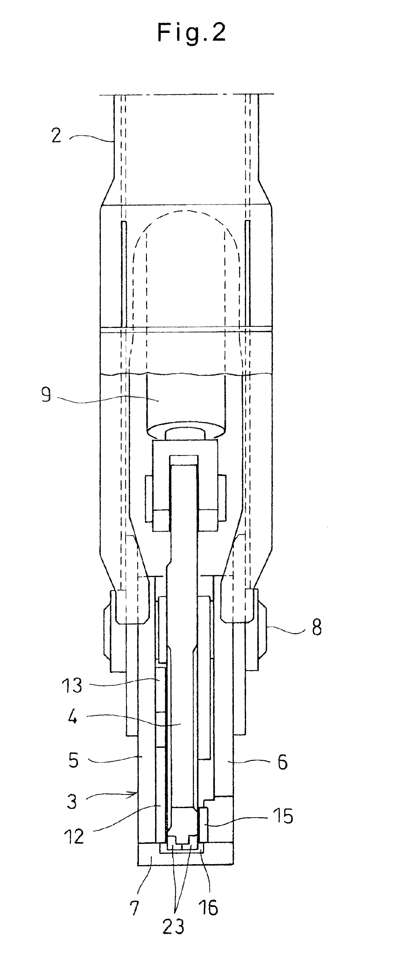

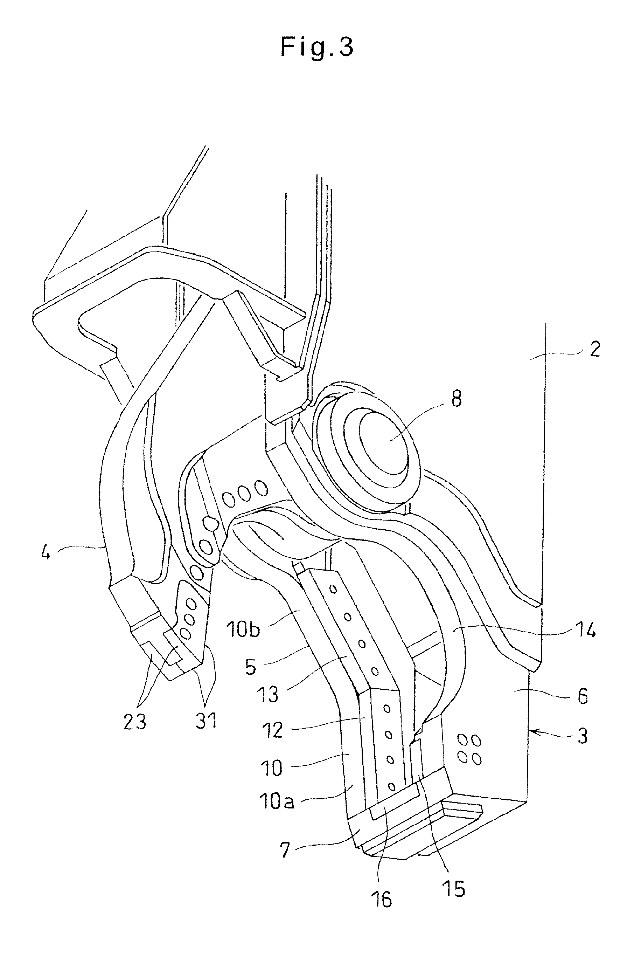

As shown in Figs. 2 and 3, the fixed jaw 3 is a U-shaped member including a blade mounting plate 5, a guide plate 6 facing the blade mounting plate 5, and a tie plate 7 extending between the distal ends of the plates 5 and 6. The distance between the opposed inner surfaces of the blade mounting plate 5 and the guide plate 6 is large enough such that the movable jaw 4 can be inserted therebetween.

A pivot shaft 8 extends between the upper portions of the blade mounting plate 5 and the guide plate 6 on one side of the respective plates 5 and 6. The movable jaw 4 is supported by the pivot shaft 8 so as to be pivotable about the pivot shaft 8. A hydraulic cylinder 9 mounted in the cylinder casing 2 is connected to the upper portion of the movable jaw 4. The movable jaw 4 is pivoted between its open and closed positions by the hydraulic cylinder 9. When the movable jaw 4 is pivoted toward its closed position, the movable jaw 4 crosses the blade mounting plate 5.

As shown in Fig. 3, the inner side surface 10 of the blade mounting plate 5 which faces the movable jaw 4 includes a first flat surface portion 10a and a second flat surface portion 10b that are inclined relative to each other, forming a longitudinally concave V shape. Shear blades 12 and 13 are mounted on the back side of the blade mounting plate 5 over which the movable jaw 4 is adapted to slide so as to extend along the first and second flat surface portions 10a and 10b, respectively.

An arcuate recess 14 is formed on the inner side surface of the guide plate 6. A shear blade 15 is mounted on the distal end portion of the surface of the guide plate 6 facing the blade mounting plate. A shear blade 16 is mounted on the top surface of the tie plate 7.

As shown in Fig. 1, the inner side surface 17 of the movable jaw 4 includes a third flat surface portion 17a and a fourth flat surface portion 17b which are inclined relative to each other so as to be concave toward its center. Thus, when the movable jaw 4 is pivoted toward its closed position, the movable jaw 4 crosses the blade mounting plate 5 at the distal end of the inner side surface 17 first, and the crossing point gradually moves toward the center of the inner side surface.

Shear blades 19 and 20 are mounted on the back side of the movable jaw 4 over which the blade mounting plate 5 slides so as to extend along the flat surface portions 17a and 17b, respectively. The shear blades 19 and 20 shear any objects gripped between the fixed jaw 3 and the movable jaw 4 in cooperation with the shear blades 12 and 13.

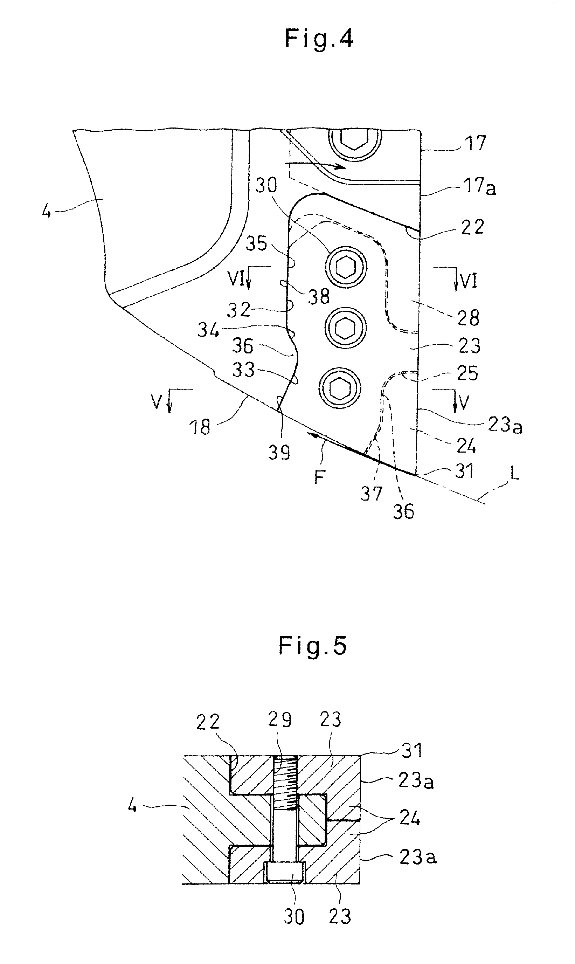

As shown in Figs. 4 to 8, two insert mounting recesses 22 are formed in the respective front and back surfaces of the movable jaw 4 at their distal end portions so as to each open to the inner side surface 17 and the distal end surface 18, of the movable jaw 4. Two shear inserts 23 made of a metal harder than the material forming the movable jaw 4 are mounted in the respective insert mounting recesses 22.

The shear inserts 23 have protruding portions 24 covering the distal end portion of the inner side surface 17 of the movable jaw 4. The protruding portions 24 are received a cutout 25 formed in the inner side surface 17 of the movable jaw 4 at its distal end portion and kept in abutment with each other.

Along its outer edge, the back surface of each shear insert 23 is formed with a longitudinal cutout 26a extending from the mid-portion to the rear end portion, of the inner side surface of the insert 23, and a lateral cutout 26b extending from the rear end of the longitudinal cutout 26a to the outer side surface of the insert 23. The insert mounting recesses 22 each have, on its insert abutting surface 27, an L-shaped protrusion 28 adapted to be fitted in the longitudinal cutout 26a and the lateral cutout 26b.

The shear inserts 23 are mounted to the movable jaw 4 by inserting bolts 30 through one of the inserts 23 and the movable jaw 4, threading the bolts 30 into threaded holes 29 formed in the other insert 23, and tightening the bolts 30.

The insert mounting recess 22 formed in the back surface of the movable jaw 4 has an extended portion extending in the longitudinal direction of the movable jaw 4. The shear blades 19 and 20 are received in this extended portion. The shear blade 19, which is located nearer to the distal end, is arranged such that the end surface of the shear blade 19 faces the end surface of the shear insert 23 with a minute gap left therebetween.

As shown in Fig. 4, the shear inserts 23 have inner side surfaces 23a which are substantially flush with the third flat surface portion 17a of the inner side surface 17 of the movable jaw 4. Thus, the outer edges of the inner side surface portion 17a, including the protruding portions 24, serves as shear cutting edges 31. The shear cutting edges 31 shear, in cooperation with the shear blades 12, 15 and 16, any objects gripped therebetween.

As described above, when the movable jaw 4 is pivoted toward its closed position, the movable jaw 4 crosses the blade mounting plate 5 at its distal end first and the crossing point gradually moves toward its longitudinal center. Thus, when objects are first sheared (by piercing) by the shear inserts 23 at their distal ends, an especially large shear reaction force F acts on the shear inserts 23 in the direction L shown Fig. 4.

As shown in Fig. 4, each insert mounting recess 22 has an outer side wall 32 which opposes the opening in the inner side surface of the movable jaw 4. The outer side wall 32 includes, from the distal end thereof, a first flat surface 33 inclined outwardly relative to the inner side surface 23a of the shear insert 23, an inclined surface 34 extending from the rear end of the first flat surface 33 and inclined in the opposite direction to the first flat surface 33, and a second flat surface 35 extending from the rear end of the inclined surface 34 substantially parallel to the inner side surface 23a of the shear insert 23. A projection 36 is defined at the boundary between the first flat surface 33 and the inclined surface 34 which protrudes into the insert mounting recess 22 and into the corresponding recess of the insert.

However, the inclined surface 34 may be omitted, and the second flat surface 35 may be directly connected to the rear end of the first flat surface 33 to define a bent portion at the boundary between the first flat surface 33 and the second flat surface 35.

The cutout 25, in which the protruding portions 24 of the shear inserts 23 are received, has an inner periphery 25a including a third flat surface 37 extending substantially parallel to the first flat surface 33 of each recess 22.

Each shear insert 23 has an abutment surface 38 which is in surface-to-surface abutment with the inclined surface 34 and the second flat surface 35, and a braking surface 39 which faces the first flat surface 33 with a minute gap therebetween. When force acts on the distal end of each shear insert 23 while shearing (by piercing) an object, and the abutment surface 38 pivots about the projection 36 in a direction away from the second flat surface 35, the braking surface 39 is configured to be brought into contact with the first flat surface 33 over the entire area.

The above-mentioned minute gap may be one that is inevitably formed when forming the surfaces 33 to 35 of each insert mounting recess 22 and the surfaces 38 and 39 of each shear insert 23, or may be one formed positively and intentionally.

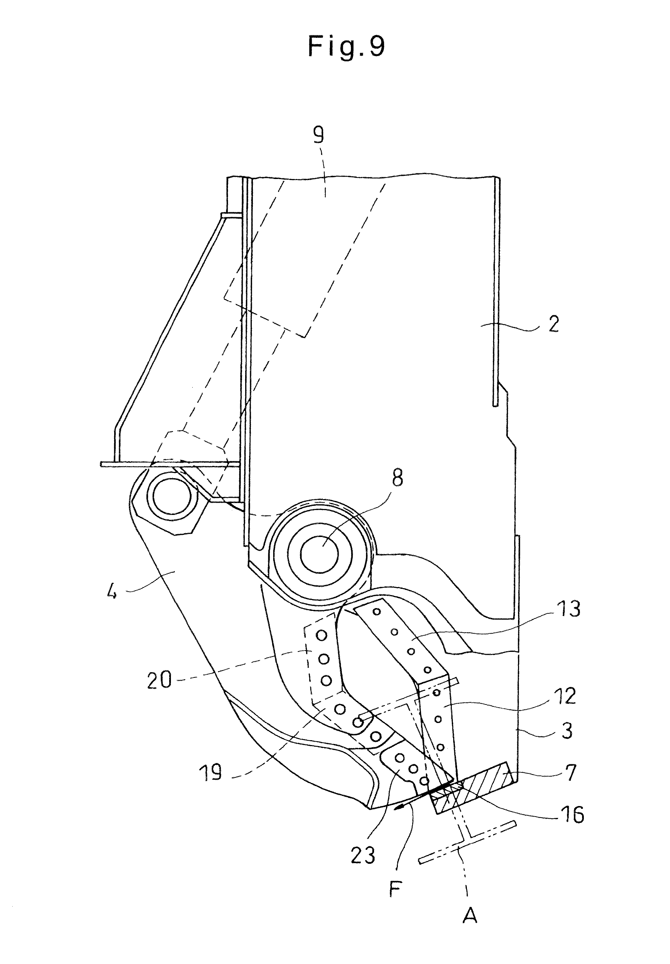

Now the operation of the demolition cutter of the above embodiment is described. When the hydraulic cylinder 9, shown in Fig. 1, is extended, the movable jaw 4 pivots about the pivot shaft 8 toward its closed position. Fig. 9 shows the position of the movable jaw 4 immediately before it reaches its completely closed position.

When the movable jaw 4 is pivoted toward its closed position, since the inner side surface 17 of the movable jaw 4 is longitudinally concave toward its center, the movable jaw 4 first crosses the fixed jaw 3 at its distal end, and then the crossing point moves toward its longitudinal center.

Thus, when the movable jaw 4 is pivoted toward the closed position with an object A to be cut, such as H-steel shown in chain line in Fig. 1, gripped between the fixed jaw 3 and the movable jaw 4, the object A is initially sheared between the shear inserts 23 and the shear blades 12, 15 and 16, and between the distal end portion of the shear blade 12 of the fixed jaw 3 and the distal end portion of the shear blade 19 of the movable jaw 4.

When the object A is sheared between the shear inserts 23 and the shear blades 12, 15 and 16, shear reaction force F acts on the distal ends of the shear inserts 23, which applies a rotational moment to the respective inserts 23 which tends to pivot each insert about the projection 36 such that the abutment surface 38 moves away from the second flat surface 35 (in the direction shown by the arrow in Fig. 4).

At this time, since the braking surface 39 of the shear insert 23 contact the first flat surface 33 over the entire area, the rotational moment applied to the shear insert 23 is supported by the entire area of the first flat surface 33. Since the first flat surface 33, the L-shaped protrusion 28, which is fitted in the longitudinal cutout 26a, and the third flat surface 37 face the corresponding surfaces of the shear insert 23 in the rotational direction, support of the rotational moment applied to the shear insert 23 is shared by the first flat surface 33, protrusion 28 and third flat surface 37. This prevents concentration of stress on the distal end of the outer side wall 32 of each insert mounting recess 22 (distal end of the first flat surface), which in turn prevents local plastic deformation of the distal end of the first flat surface 33.

Since a rotational moment applied to the tip of each shear insert 23 can be supported by the first flat surface 33, protrusion 28 and third flat surface 37, no rotational moment is applied to the bolts 30, which secure the shear inserts 23, which prevents breakage of the bolts 30.

As described above, while the object A to be cut is being sheared, since a rotational moment resulting from a shear reaction force applied to the distal ends of the shear inserts 23 is supported by all of the first flat surface 33, protrusion 28 and third flat surface 37, it is possible to prevent plastic deformation of the distal ends of the outer side walls 32 of the respective insert mounting recesses 22, and the distal end portion of the inner periphery 25a of the cutout 25. This improves durability of the movable jaw 4.

The protrusions 36 provided at the rear end portions of the respective first flat surfaces 33 prevent separation of the shear inserts 23 in the forward direction even if the bolts 30 are broken.

If the cutter fails to cut the object A to be cut as intended, and the object A gets jammed inside the fixed jaw 3 between the shear inserts 23, when the movable jaw 4 is subsequently pivoted toward its open position, the shear inserts 23, which are jammed in the object A, are pulled by the object A, so that the shear inserts 23 tend to pivot in the direction away from the respective first flat surfaces 33, i.e. in the direction opposite to the direction shown in the arrow in Fig. 4, with a large force. At this time, since the second flat surfaces 35 face the abutment surfaces 38 of the respective shear inserts 23 in the rotational direction, and the closed ends of the longitudinal cutouts 26a face the distal end surfaces of the respective L-shaped protrusions 28 in the rotational direction, the force that acts on the shear inserts 23 is supported by the second flat surfaces 35 and the distal end surfaces of the L-shaped protrusions 28. This prevents the rotational moment from being applied to the bolts 30.

While the object A to be cut is being sheared (by piercing) by the shear cutting edges 31 of the respective shear inserts 23 at their portions other than their distal end portions, too, since the shear reaction force applied to the shear inserts can be supported by the first flat surfaces 33, protrusions 28 and third flat surfaces 37, it is possible to prevent local plastic deformation of the distal ends of the first flat surfaces 33.

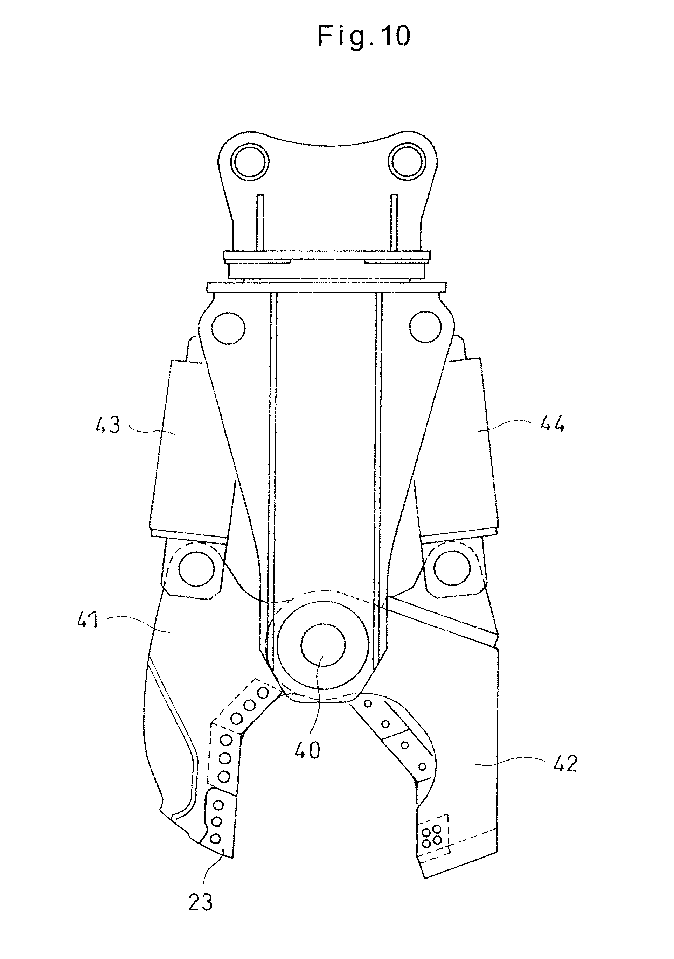

The demolition cutter shown in Figs. 1 to 9 is a single-pivot type load cutter in which the movable jaw 4 is moved between the open and closed positions relative to the fixed jaw 3. But the demolition cutter according to the present invention is not limited to this type. The second embodiment, shown in Fig. 10, is a double-pivot type demolition cutter in which two jaws 41 and 42 are both movable. That is, the two jaws 41 and 42 of this embodiment are both pivoted about a pivot shaft 40 between open and closed positions by hydraulic cylinders 43 and 44, respectively.

In this double-pivot type demolition cutter, the two shear inserts 23 are mounted to both sides of the jaw 41 at its distal end portion, in the manner as shown in Figs. 4 to 8. The same shear blades shown in Fig. 3 are mounted to the other jaw 42 in the same manner as shown in Fig. 3 to shear an object to be cut in cooperation with the shear inserts 23.

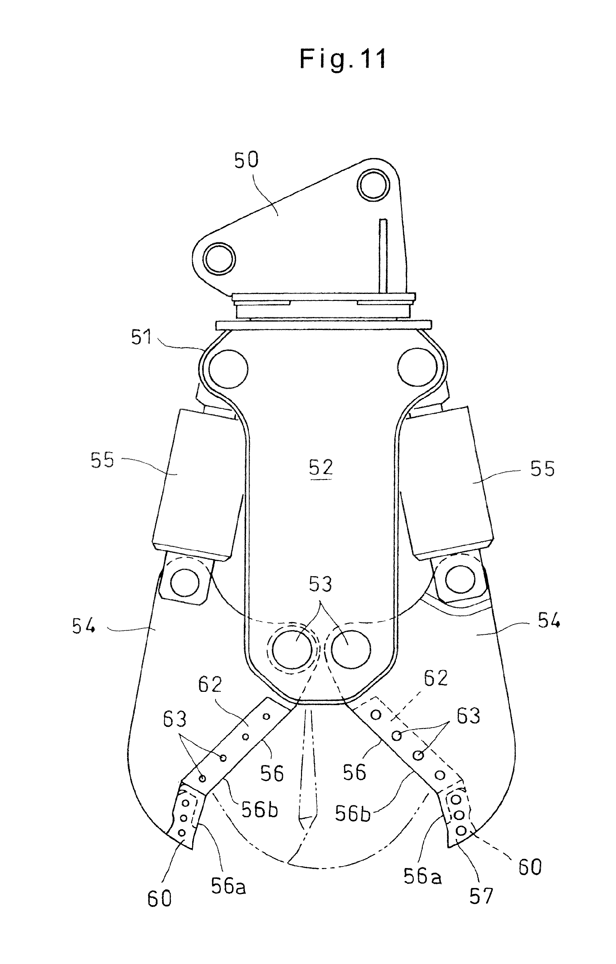

Figs. 11 to 14 show the demolition cutter according to the third embodiment of the present invention. The demolition cutter of this embodiment includes a fixed bracket 50 adapted to be detachably mounted to the free end of an arm of construction or civil engineering machinery, a movable bracket 51 rotatably coupled to the fixed bracket 50 and having opposed side plates 52, two pivot shafts 53 extending between the opposed side plates 52 of the movable bracket 51 so as to be horizontally spaced apart from each other, a pair of right and left jaws 54 supported by the respective pivot shafts 53 so as to be pivotable between open and closed positions about the respective pivot shafts 53. The jaws 54 are pivoted between the open and closed positions by hydraulic cylinders 55, respectively.

The jaws 54 each have an inner side surface 56 including a first flat surface portion 56a and a second flat surface portion 56b forming a V shape so as to be concave toward its center. The first flat surface portion 56a, which is located nearer to the distal end of the jaw, has an inwardly protruding claw 57 at its distal end. The inner edge portions of the back surfaces of the respective jaws 54 which are adapted to overlap with each other when the jaws 54 are closed are each formed with an insert mounting recess 58 extending along the first flat surface portion 56a and a blade mounting recess 59 extending from the rear end of the insert mounting recess 58 along the second flat surface portion 56b. A shear insert 60 is mounted in the insert mounting recess 58 and fixed to the jaw by bolts 61. A shear blade 62 is mounted in the blade mounting recess 59 and fixed to the jaw by bolts 63.

The insert mounting recesses 58 each have an outer side wall 64 which faces the opening of the insert mounting recess 58, i.e. the opening in the inner side surface 56 of the jaw. The outer side wall 64 includes, from the distal end thereof, a first flat surface 65 inclined outwardly relative to the inner side surface 60a of the shear insert 60, an inclined surface 66 extending from the rear end of the first flat surface 65 and inclined in the opposite direction to the first flat surface 65, and a second flat surface 67 extending from the rear end of the inclined surface 66 substantially parallel to the inner side surface 60a of the shear insert 60. A projection 70 is defined at the boundary between the first flat surface 65 and the inclined surface 66 which protrude into the insert mounting recess 58.

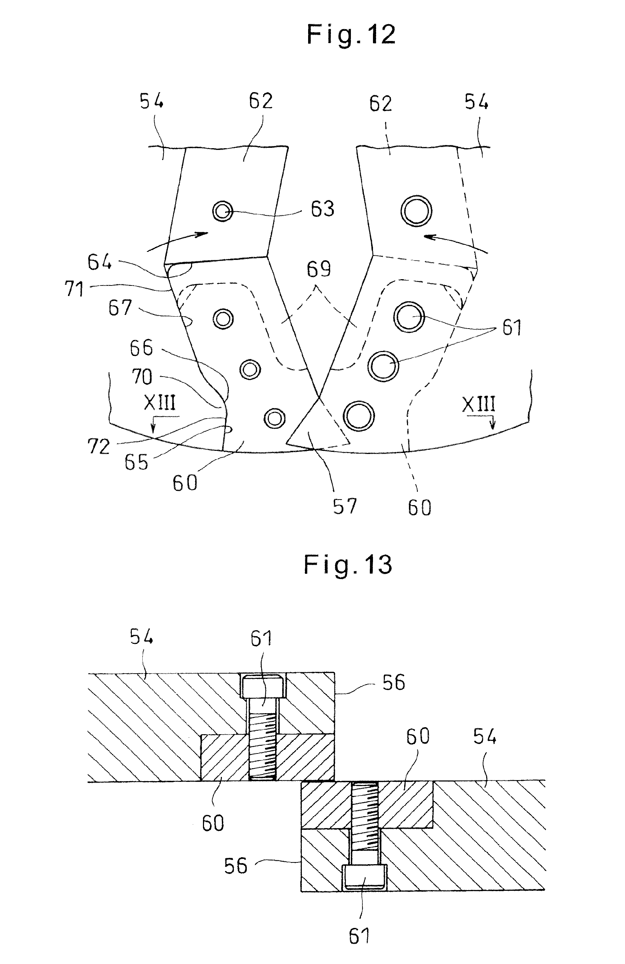

Each shear insert 60 has an abutment surface 71 which is in surface-to-surface abutment with the inclined surface 66 and the second flat surface 67, and a braking surface 72 which faces the first flat surface 65 with a minute gap therebetween. When the abutment surface 71 pivots about the projection 70 in a direction away from the second flat surface 67 (direction of the arrow in Fig. 12), the braking surface 72 is configured to be brought into contact with the first flat surface 65 over the entire area.

Along its outer edge, the back surface of each shear insert 60 is formed with a longitudinal cutout 68a extending from the mid-portion to the rear end portion, of the inner side surface of the insert 60, and a lateral cutout 68b extending from the rear end of the longitudinal cutout 68a to the outer side surface of the insert 60. The insert mounting recesses 58 each have, on its insert abutting surface, an L-shaped protrusion 69 adapted to be fitted in the longitudinal cutout 68a and the lateral cutout 68b.

When the jaws 54 of the demolition cutter of this embodiment are closed to shear an object to be cut with the distal ends of the opposed pair of shear inserts 60, the shear reaction force that acts on the distal ends of the shear inserts 60 causes the shear inserts 60 to pivot about the respective projections 70 such that the abutment surfaces 71 move away from the respective second flat surfaces 67 until the braking surfaces 72 are brought into contact with the respective first flat surfaces 65 over their entire areas. Thus, it is possible to support a rotational moment that acts on the shear inserts 60 by the first flat surfaces 65 over their entire areas, and further by the protrusions 69 too. This prevents concentration of stress on the distal ends of the outer side walls 64 of the respective insert mounting recesses 58 (distal ends of the first flat surfaces 65), which in turn prevents local plastic deformation of the distal ends of the first flat surfaces 65 of the respective insert mounting recesses 58.

Since loads, such as rotational moment, that act on the shear inserts 60 are received by the first flat surfaces 65 and the L-shaped protrusions 69, these loads never act on, and thus never influence, the adjacent shear blades 62. This prevents loosening of the shear blades 62. Conversely, when a rod material is cut with the shear blades 62, no loads act on the shear inserts 60, which prevent damage to the shear inserts 60.

In the third embodiment, the two jaws 54 are pivoted about the two respective pivot shafts 53. But instead, the jaws 54 may be pivotally supported on a single common pivot shaft. Also, one of the jaws may be fixed with the other jaw pivotable between the open and closed positions.

### DESCRIPTION OF THE NUMERALS

3. Fixed jaw
4. Movable jaw
12. Shear blade
15. Shear blade
16. Shear blade
17. Inner side surface
22. Insert mounting recess
23. Shear insert
24. Protruding portion
25. Cutout
25a. Inner periphery
26a. Longitudinal cutout
26b. Lateral cutout
28. Protruding portion
31. Shear cutting edge
32. Outer side wall
33. First flat surface
34. Inclined surface
35. Second flat surface
36. Projection
37. Third flat surface
38. Abutment surface
39. Braking surface
54. Jaw
56. Inner side surface
56a. First flat surface portion
56b. Second flat surface portion
58. Insert mounting recess
59. Blade mounting recess
60. Shear insert
62. Shear blade
64. Outer side wall
65. First flat surface
66. Inclined surface
67. Second flat surface
68a. Longitudinal cutout
68b. Lateral cutout
69. Protrusion
70. Projection
71. Abutment surface
72. Braking surface

## Claims

1. A demolition cutter comprising:
first and second jaws which are movable relative to each other between open and closed positions such that when the first and second jaws are moved relative to each other toward the closed position, the first and second jaws cross each other at distal ends thereof first and the crossing points move toward centers thereof, wherein the first jaws is formed with insert mounting recesses in back and front surfaces thereof at a distal end portion thereof, and open to an inner side surface and a distal end surface, of the first jaw;
two shear inserts having protruding portions, respectively, which cover the inner side surface of the first jaw at a distal end portion of the inner side surface, and fitted in and bolted to the respective insert mounting recesses, wherein each of the two shear inserts, including the protruding portion thereof, has an inner side surface defined by outer edges, the outer edges serving as shear cutting edges; and
shear blades mounted to the second jaw so as to face the respective shear cutting edges of the two shear inserts, whereby an object to be sheared is sheared by the shear blades and the shear inserts;
**characterized in that** the insert mounting recesses each have an outer side wall facing the opening of the inner side surface of the first jaw, and comprising a first flat surface inclined outwardly relative to the inner side surface of the corresponding shear insert, and a second flat surface connected to a rear end of the first flat surface and extending substantially parallel to the inner side surface of the corresponding shear insert, wherein a bent portion is provided at the boundary between the first and second flat surfaces, the shear insert each having an abutment surface which is in surface-to-surface abutment with the second flat surface, and a braking surface facing the first flat surface and configured to be brought into contact with the first flat surface over the entire area thereof when the shear insert pivots about the bent portion in a direction in which the abutment surface moves away from the second flat surface,
wherein the shear inserts each have a back surface formed, along its outer edge, a longitudinal cutout extending from a mid-portion of the inner side surface of the shear insert toward a rear end thereof, and a lateral cutout connected to a rear end of the longitudinal cutout and extending to an outer side surface of the shear insert, and
wherein the insert mounting recesses each have an insert abutting surface formed with a continuous L-shaped protrusion configured to be fitted in the longitudinal cutout and the lateral cutout.

2. The demolition cutter of claim 1, wherein the first jaw has a cutout in the inner side surface thereof at its distal end, the protruding portions of the shear inserts being configured to be fitted in the cutout of the first jaw, and wherein the cutout of the first jaw has an inner periphery formed with a third flat surface at a distal end of the inner periphery of the cutout of the first jaw which extends parallel to the first flat surfaces.

3. The demolition cutter of claim 1 or 2, wherein the outer side wall of each of the insert mounting recesses further comprises an inclined surface connected to the rear end of the first flat surface and extending to a front end of the second flat surface, the inclined surface being inclined in an opposite direction to the first flat surface, and wherein a projection is formed at the boundary between the inclined surface and the first flat surface, the projection protruding into the insert mounting recess.

4. A demolition cutter comprising:
two jaws which are movable relative to each other between open and closed positions, wherein the jaws each have an inner side surface comprising a first flat surface portion and a second flat surface portion forming a V shape so as to be concave toward a center of the inner side surface, and a back surface configured to overlap with the back surface of the other jaw when the jaws are moved toward the closed position, the back surface being formed with an insert mounting recess extending along the first flat surface portion, and a blade mounting recess connected a rear end of the insert mounting recess and extending along the second flat surface portion;
two shear inserts fitted in and bolted to the respective insert mounting recesses so as to face each other when the jaws are moved relative to each other to the closed position; and
two shear blades fitted in and bolted to the respective blade mounting recesses so as to face each other when the jaws are moved relative to each other to the closed position, whereby an object to be sheared is sheared between the shear inserts and between the shear blades when the jaws are moved relative to each other to the closed position;
**characterized in that** the insert mounting recesses each have an outer side wall facing the opening of the inner side surface of the first jaw, and comprising a first flat surface inclined outwardly relative to the inner side surface of the corresponding shear insert, and a second flat surface connected to a rear end of the first flat surface and extending substantially parallel to the inner side surface of the corresponding shear insert, wherein a bent portion is provided at the boundary between the first and second flat surfaces, the shear insert each having an abutment surface which is in surface-to-surface abutment with the second flat surface, and a braking surface facing the first flat surface and configured to be brought into contact with the first flat surface over the entire area thereof when the shear insert pivots about the bent portion in a direction in which the abutment surface moves away from the second flat surface,
wherein the shear inserts each have a back surface formed, along its outer edge, a longitudinal cutout extending from a mid-portion of the inner side surface of the shear insert toward a rear end thereof, and a lateral cutout connected to a rear end of the longitudinal cutout and extending to an outer side surface of the shear insert, and
wherein the insert mounting recesses each have an insert abutting surface formed with a continuous L-shaped protrusion configured to be fitted in the longitudinal cutout and the lateral cutout.

5. The demolition cutter of claim 4, wherein the outer side wall of each of the insert mounting recesses further comprises an inclined surface connected to the rear end of the first flat surface and extending to a front end of the second flat surface, the inclined surface being inclined in an opposite direction to the first flat surface, and wherein a projection is formed at the boundary between the inclined surface and the first flat surface, the projection protruding into the insert mounting recess.
